# EUROPEAN PATENT SPECIFICATION

(11) **EP 3 060 088 B1**
(45) Date of publication and mention of the grant of the patent: **22.11.2017**
(21) Application number: 14786842.6
(22) Date of filing: 15.10.2014
(51) Int. Cl.: A23C 9/18, A23F 5/46, A47J 31/40

(54) **PROCESS FOR PREPARING MILK BASED BEVERAGES**
VERFAHREN ZUR HERSTELLUNG VON GETRÄNKEN AUF MILCHBASIS
PROCÉDÉ DE PRÉPARATION DE BOISSONS À BASE DE LAIT

(30) Priority: 25.10.2013 EP 13190325
(43) Date of publication of application: 31.08.2016
(73) Proprietor: Nestec S.A., 1800 Vevey (CH)
(72) Inventor: RAWYLER, Fabien, CH-1584 Villars-Le-Grand (CH); REY, Cédric, CH-1315 La Sarraz (CH); PERROT, Marie, F-25300 Pontarlier (FR); LEUENBERGER, Ursula, CH-3065 Bolligen (CH); FETTAH, Souad, CH-3012 Bern (CH); LORILLEUX, Clémence, CH-1630 Bulle (CH); ROUSSELON, Charlotte, CH-3012 Bern (CH)
(74) Representative: Ducreux, Marie
(86) International application number: PCT/EP2014/072113
(87) International publication number: WO 2015/059010

(56) References cited:
- EP-A1- 2 123 201
- WO-A1-2011/139151
- WO-A1-2011/157759
- WO-A1-2012/136643
- US-A- 6 099 878

## Description

### Field of the invention

The present invention relates to beverage dispensers configured for providing milk based beverages from milk powders.

### Background of the invention

Beverage dispensers configured for preparing beverages from soluble powders are known from the prior art. These dispensers can produce coffee, tea, soup, chocolate and these beverages can be mixed with a milk component according to known recipes like cappuccino, latte macchiato or mocha. Other beverages consist only on a perfumed milk component like caramel latte, vanilla latte.

Milk comprises fats. Indeed full fat milk usually comprises at least 26 % weight fat. Currently in beverage dispensers it is proposed to the customers to select either full fat milk (or even semi-skimmed milk which comprises about 16 % in weight fat) or skimmed milk to prepare their milk based beverages. As skimmed milk comprises about 1 % weight fat the consumers are able to select the milk type that fits the best with their personal diet.

Yet for some customers there is a noticeable difference of taste in the final beverage between a recipe prepared with a skimmed milk powder and the same recipe prepared with full fat milk powder or semi-skimmed milk powder. So these customers may be reluctant in ordering a beverage with skimmed milk though said beverage could suit better their diets.

Now it has been noticed surprisingly that the taste of milk reconstituted from a milk powder presenting a global fat content of about 8 % weight presents a taste profile closer to milk reconstituted from a full fat milk powder than to milk reconstituted from a skimmed milk powder. This result was unexpected since it is currently known that the taste of milk is closely linked to the presence of fat. It also been noticed that all milk reconstituted from milk powders having a fat content above 8 % presented a taste profile close to a beverage reconstituted from a full fat milk powder.

The object of the present invention is to propose a beverage dispenser able to propose milk based beverages prepared from either full fat milk or reduced fat milk and that present close taste profiles.

Another object of the present invention is to propose a beverage dispenser able to propose milk based beverages prepared from at least reduced fat milk and that do not present the taste profile of skimmed milk.

Another object of the present invention is to propose beverage dispensers able to provide more milky taste profiles.

WO 2011/157759 discloses a beverage dispenser and therefore a method with two ingredient containers, dosing devices cooperating with said ingredient containers.

US 609987 discloses a fully automatic espresso machine with two tanks of milk containing milk with different fat content.

WO2012/136643, EP 2 123 201 and WO2011/139151 furthermore disclose relevant methods and devices.

### Summary of the invention

According to a first aspect, the invention concerns a process for preparing a beverage, said beverage comprising at least one milk beverage component,
wherein the beverage is prepared by means of a beverage dispenser, said beverage dispenser comprising :
- at least two milk ingredient containers storing different milk ingredients, said milk ingredients differing by their fat contents,
- dosing devices cooperating with milk ingredient containers for dosing doses of milk ingredients from each milk ingredient container,
and wherein the process comprises the steps of:
- introducing doses of different milk ingredients simultaneously in a beverage reconstitution place,
- mixing said doses of different milk ingredients together with a diluent in order to produce the milk beverage component.

The process of the present invention is implemented in a beverage dispenser in which beverages are prepared by mixing a soluble beverage ingredient, in particular a milk ingredient like a soluble milk powder or a milk concentrate, with a diluent. The diluent dissolves the soluble beverage ingredient through contacting and mixing. The diluent is usually water. One step of the beverage preparation consists in dosing a dose of soluble beverage ingredient and a dose of diluent and delivering them in a beverage reconstitution place in which the dose of soluble beverage ingredient and the dose of diluent enter into contact and mix.

According to a first mode the beverage reconstitution place can be a drinking cup. This type of beverage dispenser corresponds to in-cup mixing dispensers. Usually the dose of diluent is delivered through at least one nozzle, preferably in the form of a jet configured for agitating and mixing the mixture of soluble beverage ingredient and diluent.

According to a second mode the beverage reconstitution place can be a mixing chamber. The mixing chamber is configured for receiving doses of milk ingredients and of diluent, mixing said doses to produce a beverage and delivering the beverage through the mixing chamber outlet in a drinking cup. Preferably the mixing chamber comprises a whipper for dissolving the soluble beverage ingredient in the diluent and eventually frothing the beverage.

Whatever the mode concerning the beverage reconstitution place, the milk beverage ingredient is usually stored in a multidose storage container, either disposable or not, and a dose of soluble beverage component is withdrawn from the storage container each time a beverage is prepared. Any known device for dosing a beverage powder or a beverage concentrate can be used.

According to the preferred embodiment the milk ingredient containers store milk powders. In the present invention the terms "milk powder" indifferently cover powders, pellets or granules of soluble milk solid.

For such milk powders the device for dosing the soluble beverage component is preferably a volumetric dosing device like a screw auger, a spring auger, a dosing auger or perforated discs. The milk powder dosing device of the dispenser is usually mechanical. Preferably it is actuated by a motor.

According to the preferred embodiment the milk powder is stored in a storage container and the dosing device of the milk powder - preferably a screw auger - is placed at the bottom of the storage container. This assembly of the storage container and the dosing device is usually identified as a canister in current beverage dispensers.

The dosing device doses the milk powder which is delivered at the storage container outlet and then dispensed to the beverage reconstitution place.

According to the invention the dispenser comprises at last two milk powder containers storing different milk powders, said powders differing by their fat content. The milk powder containers can store different milk powders presenting fat contents comprised between 1 and 42 % in weight, preferably between 1 and 26 % in weight, even more preferably between 1 and 16 % in weight.

According to the preferred embodiment the milk powder containers comprise at least a milk powder presenting a fat content of about 1 % in weight and a milk powder presenting a fat content of about 16 % in weight. As a matter of fact these both contents of fats correspond to the most current fat contents for milk powders on the market. These two contents of fats present also the advantage of enabling the production of a wide range of milk powders mixtures with fat contents comprised between 1 and 16 % in weight.

According to another embodiment the milk powder containers can preferably store milk powders presenting a fat content of at least 8 % in weight. As mentioned earlier it has been noticed that beverage prepared from such milk powders present a close taste to beverage prepared from full fat milk powder.

Preferably according to the process of the present invention the doses of different milk powders are simultaneously introduced in the beverage reconstitution place according to such a ratio that the fat content of the mixture of the different milk powders doses is of at least 8 % in weight.

In the present invention milk ingredient containers can store milk ingredients differing also by their flavours, their nutritional content and/or the presence of sweeteners apart from their difference in terms of fat contents. The difference between the milk ingredients in terms of nutritional contents can relate to the presence of complementary nutritional elements like vitamins. The difference between the milk ingredients in terms of sweetener contents can relate to the content of sweeteners in the milk ingredient or to the presence of different natures of sweeteners in the milk ingredient. For example the sweeteners in the milk ingredients can be selected in non-carbohydrate based sweeteners like Splenda®, Acesulfame K®, aspartame or Stevia®.

According to the invention the process for preparing a beverage comprises the step of introducing doses of different milk ingredients simultaneously in the beverage reconstitution place. Consequently in the process the final beverage is prepared from the mixture of at least two doses of different soluble milk ingredients differing by their fat content and a dose of diluent. Preferably the doses of different milk ingredients are introduced in the beverage reconstitution place at defined ratios, said ratios being defined according to the natures of the milk ingredients stored in the containers and according to the desired properties of the final beverage in terms of fat content and/or taste.

According to one embodiment the beverage dispenser in which the beverage is prepared comprises at least one module for preparing a non-milk beverage component, and the process comprises a step of mixing the milk beverage component with a non-milk beverage component prepared in said module. Preferably the beverage dispenser comprises a module for preparing a coffee based component of the beverage. The beverage dispenser can comprise a module for preparing a non-milk beverage component like tea, chocolate, or other flavoured beverages too. In this embodiment said module of the beverage dispenser can comprise :
- at least one soluble non-milk beverage component container,
- at least one dosing device cooperating with said soluble non-milk beverage component container for dosing a dose of beverage component from said container,
and the process can comprise the step of introducing the dose of non-milk beverage component in a beverage reconstitution place together with a diluent in order to produce the non-milk beverage component.

Such a module can be adapted for producing coffee, chocolate, tea from soluble coffee powder or coffee concentrate, from soluble cocoa powder or chocolate concentrate or from soluble tea powder or tea concentrate respectively.

In this embodiment said module of the beverage dispenser can alternatively be configured for brewing a dose of roast and ground coffee with water.

Preferably the non-milk beverage component prepared in the module is a coffee beverage component.

According to one preferred embodiment the dispenser comprises :
- a user interface for receiving user's input in terms of fat content and/or taste,
- a control unit for determining the doses of different milk ingredients to be introduced in the beverage reconstitution place according to user's input.

The user interface can present to the consumer :
- a list of milk based beverage recipes, and
- a list of fat content choices and/or a list of taste choices.

The milk based beverage different recipes can be presented in order to provide to the user
- a choice relative to the beverage ingredient composition (coffee and milk, chocolate, milk tea, ...) or the beverage aspect (white coffee, latte macchiato, cappuccino, mocha, ...), and
- a choice relative to fat contents or nutritional facts (rich or poor) and/or a choice relative to taste (milky aroma, milky flavour).

Additional choices can be proposed for flavour additives (vanilla, caramel), nutritional additives (vitamins) and/or sweetener additives (nature and content).

The dispenser usually comprises a control unit for implementing the process of the invention within the dispenser. More specifically the control unit instructs the dosing devices cooperating with the ingredient containers based at least in part on the at least one input of the user regarding the selected beverage. In particular the control unit can control the selection of two or more milk ingredients depending on the number of milk ingredients containers stored in the dispenser and the doses of each milk ingredient regarding the user's input.

The machine preferably comprises a user interface screen for providing information to the user and for accepting input by the consumer. The user interface screen can be a touch-sensitive screen and/or comprise touch-sensitive input parts. The machine may have a user-input device, such as a touch pad, one or more buttons and/or switches or similar devices known in the art.

According to a particular embodiment of the invention the milk ingredients are different liquid milk concentrates differing by their fat contents.

In the present invention, the terms :
- "milk beverage component" relates to reconstituted milk that is the beverage issued from the mixing of a soluble milk powder or a liquid milk concentrate with a diluent - usually water,
- "milk based beverage" relates to a beverage comprising at least a milk beverage component,
- "non-milk beverage component" relates to a beverage that does not comprise milk like coffee, tea or a beverage in which milk is not the major component like chocolate reconstituted from chocolate powder.

### Brief description of the drawings

The characteristics and advantages of the invention will be better understood in relation to the following figures in which :
- Figure 1 is a schematic diagram of a milk based beverage dispenser configured for implementing the process of the present invention,
- Figure 2 is a view a beverage dispenser configured for preparing a variety of beverages comprising a milk based beverage component according to the process of the present invention and implementing mixing chambers,
- Figure 3 is a view of another beverage dispenser configured for preparing a variety of beverages comprising a milk based beverage component according to the process of the present invention and implementing in-cup mixing.

### Detailed description of the drawings

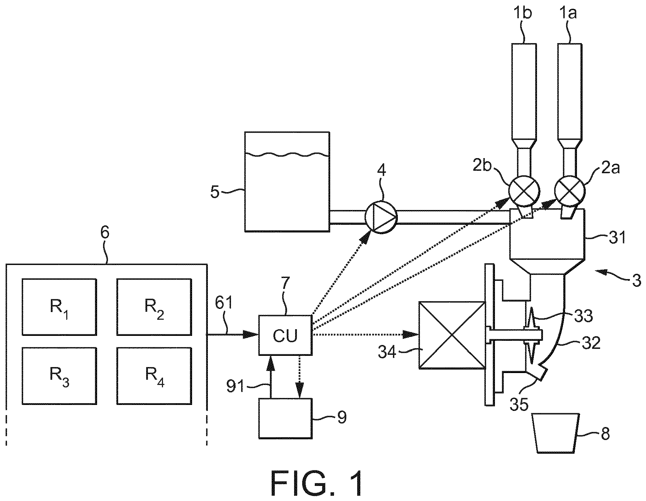

**Figure 1** illustrates a beverage dispenser configured for preparing milk based beverages according to the invention. The dispenser comprises two containers 1a, 1b each of them storing a milk powder. The powder in container 1a differs from the powder in container 1b by its fat content. For example one powder presents a fat content of 1 % in weight and the other powder presents a fat content of 16 % in weight. Each container 1a, 1b cooperates with one dosing device 2a, 2b for dosing a dose of milk powder from each milk powder container. The dosing devices 2a, 2b deliver the doses of powders in the same beverage reconstitution place 3. In the illustrated dispenser the beverage reconstitution place 3 comprises a dissolution chamber 31 and a whipper chamber 32 situated downstream to the dissolution chamber and in which a whipper is able to whip the mixtures of powders and diluent. The whipper is actuated by a motor 34. The whipper chamber 32 comprises an outlet 35 to deliver the milk component in a cup 8. The dispenser comprises a source of diluent that is a tank of water 5, preferably heated water, connected to a pump 4. The pump delivers the pumped diluent to the reconstitution place 3.

According to the process of the present invention the both doses of the different milk powders are simultaneously introduced in the dissolution chamber 31 to prepare the milk beverage component.

The dispenser comprises a control unit 7 that is able to control the dosing devices 2a, 2b, the whipper motor 34 and the pump 4. The control unit can execute computer executable program instruction stored in a memory 9.

The dispenser comprises a user interface 6, comprising an input and output device, such as a display device, so that the consumer can make a beverage selection. Preferably the controller presents to the customer a list of selectable recipes R₁, R₂, R₃, R₄, .. in the display device. The recipe can differ by their tastes and/or by their nutritional compositions, in particular by their fat contents. In a first step the controller can present to the customer a list of selectable recipes R₁, R₂, R₃, R₄ differing by their ingredient compositions (coffee and milk, chocolate, milk tea, ...) or their beverage aspect or texture (white coffee, latte macchiato, cappuccino, mocha, ...). In another step the controller can present to the customer a choice relative to fat contents or nutritional facts (rich or poor). In another step the controller can present to the customer a choice relative to taste (milky aroma, milky flavour). So based on a first choice of recipe, the controller offers to the customer the choice to select the fat contents or nutritional facts of his or her beverage, depending for example on his or her diet. In another approach the controller can offer to the customer the choice to select the taste of the beverage in terms of flavor.

The consumer may select one recipe using the display device, for instance, pressing a button provided by or associated with the display device or by touching the screen if the display device is a touch screen. The user interface 6 comprises means for receiving the input 61 from the consumer. Said input 61 is transmitted to the control unit 7 which may obtain from a local memory 9 or may communicate via a network, with at least one database 9, or may communicate with at least one data processing resource 9, such as server, to obtain corresponding process information 91 for forming the beverage recipe according to the input 61. The control unit can utilize the process information 91 to control the one or more dosing device, 2a, 2b and/or the pump 4 and/or the whipping device 3, to form and dispense a product or beverage into the cup 8 according to the recipe selected by the customer.

According to the present invention the process information 91 includes at least the ratio of the both milk powders stored in the containers 1a, 1b to be dosed in the reconstitution place 3 simultaneously. For the preparation of low fat content beverage said ratio is preferably determined so that the fat content of the resulting prepared beverage milk component is of at least 8 % in weight, in particular if the customer had also the possibility to select a beverage with a "milk rich" flavor. Indeed it has been observed that such a fat content presents a taste profile closer to full fat milk rather than to skimmed milk. Consequently a beverage milk component comprising about 8 % in weight fat presents the both advantages of low fat beverage and a good taste beverage.

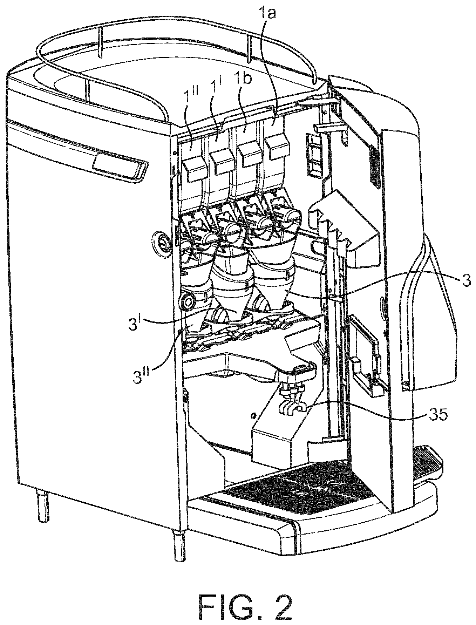

**Figure 2** illustrates a beverage dispenser comprising modules for preparing non-milk beverage components next to a module for preparing milk beverage components such as described in Figure 1. The beverage dispenser is illustrated with a housing in which the different functional elements for preparing the beverages are positioned. In particular the dispenser comprises the elements 1a, 1b, 3 of the dispenser of Figure 1 and similar components 1', 1", 3', 3" for the preparation of non-milk components like a coffee component and a tea or chocolate component. For example container 1' can store an instant tea powder or a chocolate powder and reconstitution chamber 3' can prepared a tea or chocolate from one of these powders. Similarly container 1" and the next left container (hired by the left side panel in Figure 2) can store respectively an instant soluble coffee powder and an instant soluble decaffeinated coffee powder and reconstitution chamber 3" can prepare a coffee from one of these powders.

The milk beverage component and the non-milk beverage component are prepared separately in the different reconstitution chambers and then dispensed through one of the outlet 35 in the same drinking cup. The milk and the non-milk beverage component are mixed together to produce the beverage ordered by the consumer. For example if a latte macchiato is ordered, firstly a foamed milk is prepared in the dedicated reconstitution chamber 3 by mixing doses of different milk powders from canisters 1a and 1d and a dose of diluent and said foamed milk is dispensed through one of the outlets 35 in the drinking cup. Secondly a coffee is prepared in the dedicated reconstitution chamber 3" by mixing a dose of soluble coffee powder from canister 1" and a dose of diluent and said coffee is dispensed through one of the outlets 35 in the drinking cup above the foamed milk.

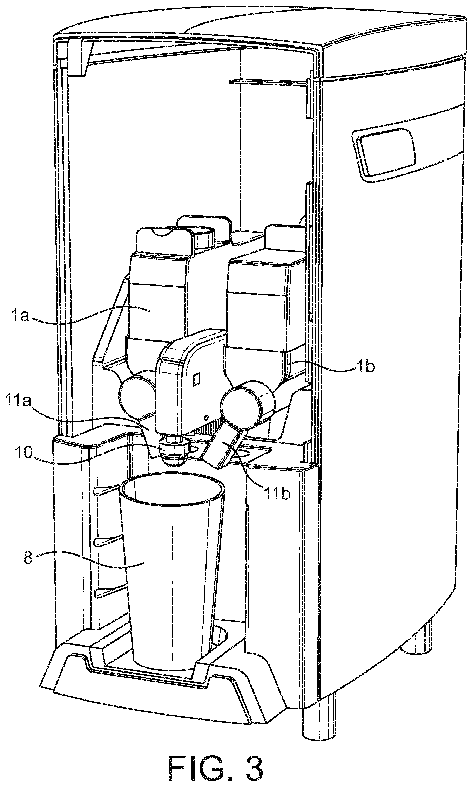

**Figure 3** illustrates an alternative to dispensers of Figures 1 and 2 wherein the beverage reconstitution place is a drinking cup 8 in place of a mixing chamber. Such a dispenser implements in-cup mixing. The different milk powders differing by their fat contents are stored in containers 1a, 1b. The containers 1a, 1b comprise integrated dosing devices for dosing each milk powder. The doses of milk powders are delivered through chutes 11a, 11b in the cup 8. The dispenser comprises a diluent supply 10 configured to deliver at least one jet of water in the cup 8 to dissolve the milk powders. WO2012/163727 describes an example of such a dispenser. The process described in relation with Figures 1 and 2 also applies to the dispenser of Figure 3 for the preparation of a milky beverage.

### Example :

Four latte macchiato were prepared with the machine of Figure 2 in which the container 1a comprised milk powder presenting a fat content of 1 % in weight and in which the container 1b comprised milk powder presenting a fat content of 16 % in weight.

The first latte macchiato was prepared with only milk powder presenting a fat content of 16 % in weight by :
- mixing 18 g of milk powder presenting a fat content of 16 % in weight with 150 ml of water at 70°C and delivering it in the cup,
- mixing 1,6 g of soluble coffee powder with 30 ml of water at 70°C and delivering it in the cup.

The second latte macchiato was prepared with a mixture of milk powder presenting a fat content of 16 % in weight and milk powder presenting a fat content of 1 % in weight by :
- mixing 9 g of milk powder presenting a fat content of 16 % in weight and 9 g of milk powder presenting a fat content of 1 % in weight with 150 ml of water at 70°C and delivering it in the cup,
- mixing 1,6 g of soluble coffee powder with 30 ml of water at 70°C and delivering it in the cup. Then the fat content of this second latte macchiato was comparable to the fat content of a latte macchiato prepared with only one milk powder presenting a fat content of 8 % in weight.

The third latte macchiato was prepared with a mixture of milk powder presenting a fat content of 16 % in weight and milk powder presenting a fat content of 1 % in weight by :
- mixing 5 g of milk powder presenting a fat content of 16 % in weight and 13 g of milk powder presenting a fat content of 1 % in weight with 150 ml of water at 70°C and delivering it in the cup,
- mixing 1,6 g of soluble coffee powder with 30 ml of water at 70°C and delivering it in the cup. Then the fat content of this third latte macchiato was comparable to the fat content of a latte macchiato prepared with only one milk powder presenting a fat content of 5 % in weight.

The fourth latte macchiato was prepared with only milk powder presenting a fat content of 1 % in weight by :
- mixing 18 g of milk powder presenting a fat content of 1 % in weight with 150 ml of water at 70°C and delivering it in the cup,
- mixing 1,6 g of soluble coffee powder with 30 ml of water at 70°C and delivering it in the cup.

Concerning the sensory profile the panel of customers noticed :
- no significant difference between the first latte macchiato and the second latte macchiato,
- a significant difference between the first latte macchiato and the third latte macchiato, in particular in terms of overall aroma.
- a very significant difference between the group of the three first latte macchiato and the fourth latte macchiato prepared with only skimmed milk (1 % in weight of fat content), in particular in terms of milky aroma and milky flavour and also in terms of bitterness and coffee flavor.

Consequently only the beverage prepared with only milk powder at 1 % fat content presented a different noticeable taste from the others.

Moreover the three latte macchiato presented the following nutritional features :

| | First Latte Macchiato | Second Latte Macchiato | Third Latte Macchiato | Fourth Latte Macchiato |
|---|---|---|---|---|
| Fat content of the milk powder doses (% in weight) | 16 | 8 | 5 | 1 |
| Energy (without fibers) (kJ) | 336.1 | 306.5 | 293.3 | 273.5 |
| Energy (without fibers)(kcal) | 79.9 | 72.6 | 69.3 | 64.4 |
| Protein (g) | 5.51 | 5.99 | 6.21 | 6.35 |
| Carbohydrate (g) | 7.97 | 8.68 | 9.00 | 9.34 |
| of which: sugars (g) | 0.05 | 0.05 | 0.05 | 0.00 |
| Fat (g) | 2.89 | 1.54 | 0.94 | 0.18 |
| of which : saturates (g) | 1.82 | 0.97 | 0.59 | 0.11 |
| of which : transfat (g) | 0.00 | 0.00 | 0.00 | 0.00 |
| Sodium (mg) | 75.04 | 81.79 | 84.79 | 86,94 |
| Calcium (mg) | 195.30 | 213.12 | 221.04 | 230,94 |

From these results it appeared that:
- the first and second latte macchiato presented the same sensory profile although the second one had 9,7 % energy less.
- the third latte macchiato presented a sensory profile closer to the first latte macchiato rather than to the fourth latte macchiato although its fat content was closer to the first latte macchiato. This surprising result is particularly interesting for providing low energy milk based beverages with a taste profile close to high fat content milk based beverages.

## Claims

1. A process for preparing a beverage, said beverage comprising at least one milk beverage component, wherein the beverage is prepared by means of a beverage dispenser, said beverage dispenser comprising :
• at least two milk ingredient containers (1b, 1a) storing different milk ingredients, said milk ingredients differing by their fat contents,
• dosing devices (2a, 2b) cooperating with the milk ingredient containers (1a, 1b) for dosing doses of milk ingredients from each milk ingredient container,
and wherein the process comprises the steps of :
- introducing doses of different milk ingredients simultaneously in a beverage reconstitution place (3, 8),
- mixing said doses of different milk ingredients together with a diluent in order to produce the milk beverage component.

2. A process according to Claim 1 wherein the beverage reconstitution place is a drinking cup (8).

3. A process according to Claim 1 wherein the beverage reconstitution place is a mixing chamber (3) configured for receiving doses of milk ingredients and a dose of diluent, mixing said doses to produce a beverage and delivering the beverage through the mixing chamber outlet in a drinking cup.

4. A process according to any one of the precedent claims wherein the milk ingredient containers (1a, 1b) store milk powders.

5. A process according to Claim 4 wherein the milk ingredient containers (1a, 1b) store milk powders presenting fat contents comprised between 1 and 42 % in weight, preferably between 1 and 26 % in weight, even more preferably between 1 and 16 % in weight.

6. A process according to Claim 4 or 5 wherein doses of different milk powders are simultaneously introduced in the beverage reconstitution place (3) according to such a ratio that the fat content of the mixture of the different milk powders doses is of at least 8 % in weight.

7. A process according to any one of Claims 4 to 6 wherein the milk powder containers comprise at least a milk powder presenting a fat content of about 1 % in weight and a milk powder presenting a fat content of about 16 % in weight.

8. A process according to any one of Claims 4 to 7 wherein the milk powder containers (1a, 1b) store milk powders presenting fat contents of at least 8 % weight.

9. A process according to any one of the precedent claims wherein the milk ingredient containers (1a, 1b) store milk ingredients differing by their flavours, their nutritional content and/or the presence of sweeteners.

10. A process according to any one of the precedent claims wherein the doses of different milk ingredients are introduced in the beverage reconstitution place (3) at defined ratios, said ratios being defined according to the natures of the milk ingredients stored in the containers and according to the desired properties of the final beverage in terms of fat content and/or taste.

11. A process according to any one of the precedent claims wherein the dispenser in which the beverage is prepared comprises a module (1', 3' or 1", 3") for preparing a non-milk beverage component, and the process comprises a step of mixing the milk beverage component with a non-milk beverage component prepared in said module.

12. A process according to Claim 11 wherein the non-milk beverage component prepared in the module is a coffee beverage component.

13. A process according to any one of the precedent claims wherein the dispenser comprises :
- a user interface (6) for receiving user's input (61) in terms of fat content and/or taste,
- a control unit (7) for determining the doses of different milk ingredients to be introduced in the beverage reconstitution place (3) according to user's input (61).

14. A process according to any one of the precedent claims wherein the milk ingredients are different milk concentrates differing by their fat contents.

## Patentansprüche

1. Verfahren zum Zubereiten eines Getränks, wobei das Getränk mindestens eine Milchgetränkekomponente umfasst, wobei das Getränk mithilfe eines Getränkespenders hergestellt wird, wobei der Getränkespender Folgendes umfasst:
• mindestens zwei Milchinhaltsstoffbehälter (1b, 1a), in denen verschiedene Milchinhaltsstoffe verstaut sind, wobei die Milchinhaltsstoffe sich durch ihren Fettgehalt voneinander unterscheiden,
• Dosiervorrichtungen (2a, 2b), die mit den Milchinhaltsstoffbehältern (1a, 1b) zum Dosieren von Milchinhaltsstoffdosen aus jedem Milchinhaltsstoffbehälter zusammenwirken,
und wobei das Verfahren die folgenden Schritte umfasst:
- gleichzeitiges Einbringen von Dosen verschiedener Milchinhaltsstoffe in einen Getränkerekonstituierungsort (3, 8),
- Mischen der Dosen verschiedener Milchinhaltsstoffe zusammen mit einem Verdünnungsmittel, um die Milchgetränkekomponente zuzubereiten.

2. Verfahren nach Anspruch 1, wobei der Getränkerekonstituierungsort ein Trinkbecher (8) ist.

3. Verfahren nach Anspruch 1, wobei der Getränkerekonstituierungsort eine Mischkammer (3) ist, die zum Aufnehmen von Milchinhaltsstoffdosen und einer Verdünnungsmitteldosis konzipiert ist, wobei die Dosen zum Zubereiten eines Getränks und Abgeben des Getränks durch den Mischkammerauslass in einen Trinkbecher gemischt werden.

4. Verfahren nach einem der vorstehenden Ansprüche, wobei in den Milchinhaltsstoffbehältern (1a, 1b) Milchpulver verstaut sind.

5. Verfahren nach Anspruch 4, wobei in den Milchinhaltsstoffbehältern (1a, 1b) Milchpulver verstaut sind, die einen Fettgehalt zwischen 1 und 42 Gew.-%, vorzugsweise zwischen 1 und 26 Gew.-%, mehr bevorzugt zwischen 1 und 16 Gew.-%, aufweisen.

6. Verfahren nach Anspruch 4 oder 5, wobei Dosen verschiedener Milchpulver gleichzeitig in einem derartigen Verhältnis in den Getränkerekonstituierungsort (3) eingebracht werden, dass der Fettgehalt der Mischung der verschiedenen Milchpulverdosen mindestens 8 Gew.-% beträgt.

7. Verfahren nach einem der Ansprüche 4 bis 6, wobei die Milchpulverbehälter mindestens ein Milchpulver, das einen Fettgehalt von etwa 1 Gew.-% aufweist, und ein Milchpulver umfassen, das einen Fettgehalt von etwa 16 Gew.-% aufweist.

8. Verfahren nach einem der Ansprüche 4 bis 7, wobei in den Milchpulverbehältern (1a, 1b) Milchpulver verstaut sind, die einen Fettgehalt von mindestens 8 Gew.-% aufweisen.

9. Verfahren nach einem der vorstehenden Ansprüche, wobei in den Milchinhaltsstoffbehältern (1a, 1b) Milchinhaltsstoffe verstaut sind, die sich voneinander in Geschmacksstoffen, Nährstoffgehalt und/oder Vorhandensein von Süßungsmitteln unterscheiden.

10. Verfahren nach einem der vorstehenden Ansprüche, wobei die Dosen verschiedener Milchinhaltsstoffe in definierten Verhältnissen in den Getränkerekonstituierungsort (3) eingebracht werden, wobei die Verhältnisse gemäß der jeweiligen Natur der in den Behältern verstauten Milchinhaltsstoffe und gemäß den gewünschten Eigenschaften des Endgetränks in Bezug auf Fettgehalt und/oder Geschmack definiert sind.

11. Verfahren nach einem der vorstehenden Ansprüche, wobei der Spender, in dem das Getränk zubereitet wird, ein Modul (1', 3' oder 1", 3") zum Zubereiten einer Nicht-Milchgetränkekomponente umfasst, und wobei das Verfahren einen Schritt des Mischens der Milchgetränkekomponente mit einer in dem Modul zubereiteten Nicht-Milchgetränkekomponente umfasst.

12. Verfahren nach Anspruch 11, wobei die in dem Modul zubereitete Nicht-Milchgetränkekomponente eine Kaffeegetränkekomponente ist.

13. Verfahren nach einem der vorstehenden Ansprüche, wobei der Spender Folgendes umfasst:
- eine Benutzerschnittstelle (6) zum Aufnehmen einer Benutzereingabe (61) in Bezug auf Fettgehalt und/oder Geschmack,
- eine Steuereinheit (7) zum Ermitteln der Dosen verschiedener Milchinhaltsstoffe zum Einbringen in den Getränkerekonstituierungsort (3) gemäß der Benutzereingabe (61).

14. Verfahren nach einem der vorstehenden Ansprüche, wobei die Milchinhaltsstoffe unterschiedliche Milchkonzentrate sind, die sich durch ihren Fettgehalt voneinander unterscheiden.

## Revendications

1. Procédé de préparation d'une boisson, ladite boisson comprenant au moins un composant de boisson lacté, dans lequel la boisson est préparée au moyen d'un distributeur de boisson, ledit distributeur de boisson comprenant :
• au moins deux récipients d'ingrédient lacté (1b, 1a) stockant différents ingrédients lactés, lesdits ingrédients lactés différant par leur teneur en matière grasse,
• des dispositifs de dosage (2a, 2b) coopérant avec les récipients d'ingrédients lactés (1a, 1b) pour mesurer des doses d'ingrédients lactés de chaque récipient d'ingrédient lacté,
le procédé comprenant les étapes consistant à :
- introduire simultanément des doses de différents ingrédients lactés dans un lieu de reconstitution de boisson (3, 8)
- mélanger lesdites doses de différents ingrédients lactés avec un diluant afin de produire le composant de boisson lacté.

2. Procédé selon la revendication 1, dans lequel le lieu de reconstitution de boisson est une tasse (8).

3. Procédé selon la revendication 1, dans lequel le lieu de reconstitution de boisson est une chambre de mélange (3) configurée pour recevoir des doses d'ingrédients lactés et une dose de diluant, mélanger lesdites doses pour produire une boisson et distribuer la boisson dans une tasse par le biais de la sortie de la chambre de mélange.

4. Procédé selon l'une quelconque des revendications précédentes, dans lequel les récipients d'ingrédients lactés (1a, 1b) contiennent des poudres de lait.

5. Procédé selon la revendication 4, dans lequel les récipients d'ingrédients lactés (1a, 1b) stockent des poudres de lait présentant une teneur en matière grasse comprise entre 1 et 42 % en poids, de préférence entre 1 et 26 % en poids, selon une préférence plus marquée entre 1 et 16 % en poids.

6. Procédé selon la revendication 4 ou 5, dans lequel des doses de différentes poudres de lait sont introduites simultanément dans le lieu de reconstitution de boisson (3) dans une proportion telle que la teneur en matière grasse du mélange des différentes doses de poudres de lait est au moins égale à 8 % en poids.

7. Procédé selon l'une quelconque des revendications 4 à 6, dans lequel les récipients de poudre de lait comprennent au moins une poudre de lait présentant une teneur en matière grasse égale à 1 % en poids environ et une poudre de lait présentant une teneur en matière grasse égale à 16 % en poids environ.

8. Procédé selon l'une quelconque des revendications 4 à 7, dans lequel les récipients de poudre de lait (1a, 1b) contiennent des poudres de lait présentant une teneur en matière grasse d'au moins 8 % en poids.

9. Procédé selon l'une quelconque des revendications précédentes, dans lequel les récipients d'ingrédient lacté (1a, 1b) contiennent des ingrédients lactés qui diffèrent par leurs arômes, leur teneur nutritionnelle et/ou la présence d'édulcorants.

10. Procédé selon l'une quelconque des revendications précédentes, dans lequel les doses de différents ingrédients lactés sont introduites dans le lieu de reconstitution de boisson (3) dans des proportions définies, lesdites proportions étant définies en fonction de la nature des ingrédients lactés stockés dans les récipients et en fonction des propriétés souhaitées de la boisson finale en termes de teneur en matière grasse et/ou de goût.

11. Procédé selon l'une quelconque des revendications précédentes, dans lequel le distributeur où la boisson est préparée comprend un module (1', 3' ou 1", 3") destiné à préparer un composant de boisson non lacté, et le procédé comprend une étape de mélange du composant de boisson lacté avec un composant de boisson non lacté préparé dans ledit module.

12. Procédé selon la revendication 11, dans lequel le composant de boisson non lacté préparé dans le module est un composant de boisson de café.

13. Procédé selon l'une quelconque des revendications précédentes, dans lequel le distributeur comprend :
- une interface utilisateur (6) destinée à recevoir une entrée (61) de l'utilisateur en termes de teneur en matière grasse et/ou de goût,
- une unité de commande (7) destinée à déterminer les doses de différents ingrédients lactés à introduire dans le lieu de reconstitution de boisson (3) en fonction de l'entrée (61) de l'utilisateur.

14. Procédé selon l'une quelconque des revendications précédentes, dans lequel les ingrédients lactés sont des concentrés de lait différents qui diffèrent par leur teneur en matière grasse.
